# EUROPEAN PATENT APPLICATION

(11) **EP 0 884 883 A2**
(43) Date of publication of application: **16.12.1998**
(21) Application number: 98401431.6
(22) Date of filing: 11.06.1998
(51) Int. Cl.: H04M 3/22, H04M 3/32

(54) **Improvements in local exchange testing**

(30) Priority: 13.06.1997 GB 9712229
(71) Applicant: SCHLUMBERGER TECHNOLOGIES, INC., San Jose, California 95110-1397 (US)
(72) Inventor: Bold, Stephen, Wimborne, Dorset BH21 2AD (GB); Halliday, Simon Roy, Parkstone-Poole, Dorset BH12 2BE (GB); Handley, Brett, Southampton, Hampshire SO40 8PW (GB)
(74) Representative: Lemoyne, Didier

(57) **Abstract**

A local exchange emulator for transmitting and receiving telephone line data comprises a plurality of serial data sequencers and global serial communication means, the plurality of serial data sequencers each being interfaced with the global serial communication means. Each serial data sequencer has a time division multiplexed I/O port for interfacing with a plurality of subscribers in use and digital signal processing means for taking measurements associated with data processed by the emulator. The digital signal processing means has first and second serial I/O lines, the first serial I/O line being connected to the I/O port for direct data transfer therewith, and the second serial I/O line being connected to the global serial communication means, the first serial I/O lines each being time division multiplexed to the same order as the I/O port. In that way, the emulator is operative on all of the time slots defined on the I/O port. That allows full real time operation of the emulator in a manner similar to that of a local exchange. The global serial communication means is time division multiplexed into a plurality of time slots. The time division multiplexing may be consistent throughout the emulator, allowing simplification of data handling.

## Description

### BACKGROUND OF THE INVENTION

### Field of the Invention

The present invention relates to improvements in local exchange testing.

In order to test the performance of local exchanges, calls may be synthesised using a bulk call generator. The calls can then be handled on an emulator.

### Description of the Prior Art

An emulator which has been used in the past for testing the performance of line cards is the S765STemulator available from Schlumberger. That product has four channels and so cannot be used in real time to test the much higher capability of a multiplexed T1/E1 line which has a much larger number of time slots than can be served effectively by the S765ST emulator. The testing of individual time slots is time consuming; the increased test time may introduce inaccuracies into the test data.

### SUMMARY OF THE INVENTION

It is an object of the present invention to provide apparatus suitable for ameliorating the above problems.

According to a first aspect of the invention there is provided a local exchange emulator, for transmitting and receiving telephone line data, the emulator comprising a plurality of serial data sequencers and global serial communication means, said plurality of serial data sequencers each being interfaced with the global serial communication means, wherein each serial data sequencer has a time division multiplexed I/O port for interfacing with a plurality of subscribers in use and digital signal processing means for taking measurements associated with data processed by the emulator, and said digital signal processing means having first and second serial I/O lines, the first serial I/O line being connected to the I/O port for direct data transfer therewith, and the second serial I/O line being connected to the global serial communication means, said first serial I/O lines each being time division multiplexed to the same order as the I/O port.

In that way, the emulator is operative on all of the time slots defined on the I/O port. That allows full real time operation ofthe emulator in a manner similar to that of a local exchange.

In a preferred embodiment of the invention, the global serial communication means is time division multiplexed into a plurality of time slots. The time division multiplexing may be consistent throughout the emulator, allowing simplification of data handling.

In that way, cross connection of time slots may be managed so that a large number of line connections can be emulated. All time slots of the I/O port can be accessed in real time, and so bulk call generation can be used to set up test routines to be carried out in real time.

Each digital signal processing means may comprise first and second signal processors.

The global serial communication means may comprise first and second channels, wherein the first digital signal processor of each digital signal processing means is connected to the first channel and the second digital signal processor of each digital signal processing means is connected to the second channel.

The first digital signal processor and the second digital signal processor of each digital signal processing means are preferably connected.

Each I/O port may define T1/E1 lines which connect with the first I/O line of the digital signal processing means. The global serial communication means is preferably of a PCM format.

According to a second aspect of the invention there is provided a method of establishing a cross connection comprising the steps of providing a plurality of time division multiplexed I/O lines;
providing a plurality of local processing means associated with each of said I/O lines,
providing global serial communication means, and in response to a request for a cross connection to be made between a first of said I/O lines and a second of said I/O lines,
reserving a first time slot on said first I/O line for transmitting data, reserving a second time slot on said first I/O line for receiving data, reserving a third time slot on said second I/O line for transmitting data, reserving a fourth time slot on said second I/O line for receiving data,
and establishing a data transfer link between said first and fourth time slots and a data transfer link between said second and third time slots.

Preferably, the method includes the steps of arranging said I/O lines in pairs and providing a respective one of said local processing means for each pair of said I/O lines.

If said first I/O line and said second I/O line do not share a common local processing means then the method may comprise the step of establishing said data transfer link by means of said global serial communication means.

In a preferred embodiment of the invention, said global serial communication means is time division multiplexed, and the method further comprises the steps of reserving two time slots of said global serial communication means in order to establish said data transfer link.

Each local processing means preferably comprises first and second processors, each processor being associated with a respective one of said pair of I/O lines, and said global serial communication means preferably comprises first and second channels, the method comprising the steps of associating said first processor of each said local processing means with said first channel and associating said second processor of each said local processing means with said second channel; the step of establishing said data transfer link comprising the steps of
if the first I/O line is the same as the second I/O line then defining the cross connection at the processor associated with that I/O line;
if the first I/O line and the second I/O line are associated with processors of the same local processing means then defining the cross connection at that local processing means;
if the first I/O line is associated with a first processor, and said second I/O line is associated with another first processor then defining said cross connection via said first bus;
if the first I/O line is associated with a second processor, and said second I/O line is associated with another second processor then defining said cross connection via said second bus; and
if the second I/O line is associated with a different local processing means from the first I/O line and a different one of the first and second processors, then establishing a cross connection via one of said buses and an intermediate processor.

### BRIEF DESCRIPTION OF THE DRAWINGS

Further aspects and advantages of the present invention will be apparent from the following description of a specific and preferred embodiment of the invention, with reference to the accompanying drawings, in which:
Figure 1 is a schematic diagram of a telephone system incorporating a system tester according to the present invention;
Figure 2 is a schematic diagram of a sequencer board of the system tester in the telephone system of figure 1;
Figure 3 is a block circuit diagram of a digital signal processor module of the sequencer board shown in figure 2;
Figure 4 is a schematic diagram showing the manner of connection of sequencer boards of figure 2 to back plane triggers;
Figure 5 is a timing diagram of "clock sync" signals and time slots in the back plane triggers of figure 4;
Figure 6 is a block circuit diagram showing the configuration of sequencers within the abovementioned system tester; and
Figure 7 is a schematic diagram of software embodying call processor option features in the system tester.

### DETAILED DESCRIPTION

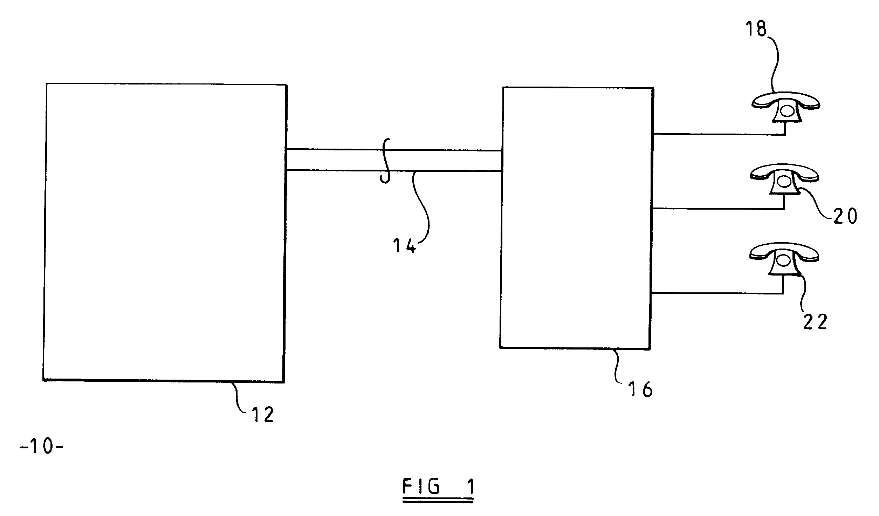

Figure 1 is a diagrammatic representation of a simple telephone system 10 in which local exchange (central office in USA) 12 is coupled through a number of lines 14 to an access node or network 16 to which, in turn, a number of telephone subscribers 18, 20, 22 are connected.

The local exchange contains automatic test equipment for testing the access nodes 16 when the latter is not in service, for example during commissioning.

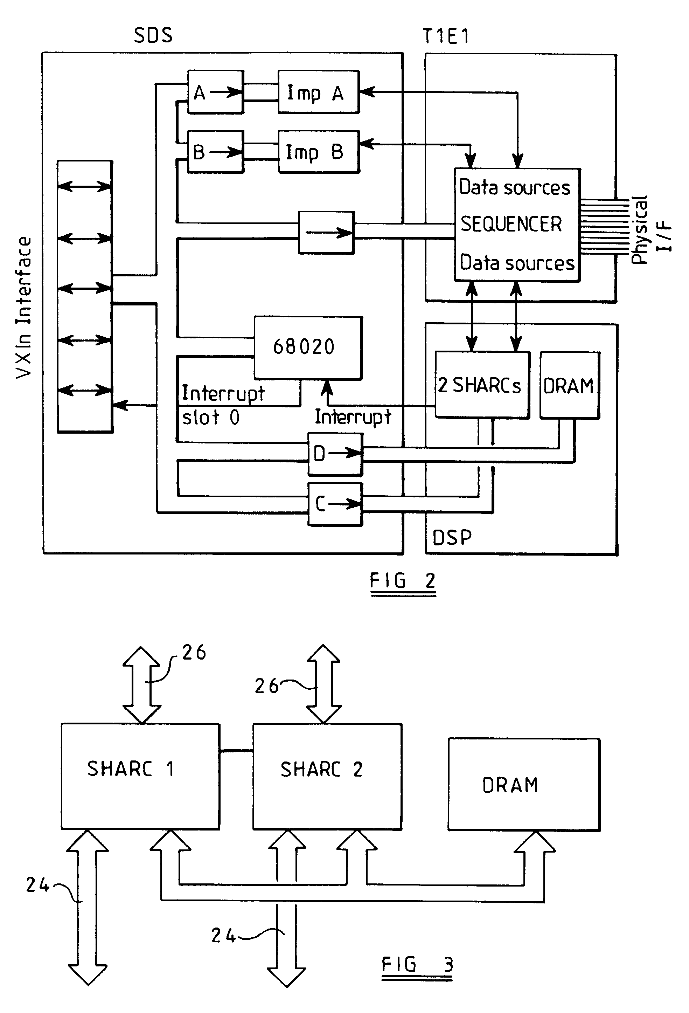

The S765ST system tester incorporating the present invention is located at the local exchange and includes a number of SDS (serial data sequencer) modules to and from which telephone line data is transmitted and received along the telephone line 14, the SDS interfacing with the telephone line through a T1/E1 daughter board. Figure 2 is a diagrammatic representation of the SDS board and T1/E1 daughter board with a DSP (digital signal processor) module according to the present invention. Figure 2 shows the relationship between the DSP subsystem and the existing equipment.

Figure 3 is a block circuit diagram of the DSP sub-system. It includes two SHARC processors SHARC 1, SHARC 2; a SHARC is a general purpose digital signal processor. Each of these processors has the capability of real-time processing of incoming and outgoing serial data streams, whilst having the power to multi-task other operations. Each SHARC processor has first and second serial ports 24,26 which can be set to operate with up to 32 time-division multiplexed channels which makes them ideally suited for use in generating and analysing data for the T1/E1 interface, which is multiplexed for 64 time-division channels. Although it would be possible for a single SHARC processor to be used to interface both T1/E1 lines on an SDS via its two serial ports, two are provided in order to ensure simultaneous proper management of sixty-four active data resources, both transmit and receive, whilst maintaining host communications and possibly performing other digital signal processor tasks. Therefore, each SHARC processor is associated with a respective T1/E1 interface of the SDS board. The second serial port 26 of each SHARC is thus available for use in implementing intra-SDS cross-connection of time slots.

The DSP module also contains D RAM which is used to store data. The interface to the SDS module is through two ports and the connections enable all of the necessary signals to allow serial data to be routed to and from the DSP module to the SDS module. The first serial port 24 from each SHARC is connected such that it can act as a data source to the SDS T1/E1 module which enables data to be sent directly from the DSP module to the SDS module without having to be transferred to the IMPs (integrated multi-protocol processors). This enables each SHARC to process data as it arrives without it having to be buffered elsewhere first.

The second serial port 26 on SHARC 1 is connected to the data port used by IMP C and the second serial port 26 on SHARC 2 is connected to the data port for IMP D. The two SHARC devices are also connected via shared memory which allows dynamic time slot mapping between the physical lines on the module. The actual number of time slots that can be handled will depend on the processing requirement for each time slot. Real-time processing will reduce the number of time slots that can be maintained.

The routing of data to and from a particular time slot is software controlled so that dynamic mapping of PCM data to time slots can be achieved.

It is possible to cross-connect incoming to outgoing time slots using the DSP. Time slots may be connected to slots on lines either on the same physical SDS or on a separate SDS. In order to map time slots between T1/E1 interfaces on separate SDS modules it is necessary to have a direct physical connection between the SDS modules. The VXI trigger lines are used as a TDM back plane. Data which is passed along these lines is not affected by transfers on the VXI bus, nor by SDS processor activity.

The second serial port 26 of each SHARC is used for the back plane connection. The serial port 26 of the SHARC can be put into TDM mode (requiring a clock pulse, a frame sync pulse, TX data and RX data). The SHARC is capable of formatting the data into TDM format and placing it onto a back plane in a position defined by the detection of the frame sync signal.

Access to the slots requires six signals for each SDS module. These are the sync and clock signals and a TX and RX pair per TDM line. This allows sixty-four time slots to be accessed or thirty-two cross connected calls to be routed.

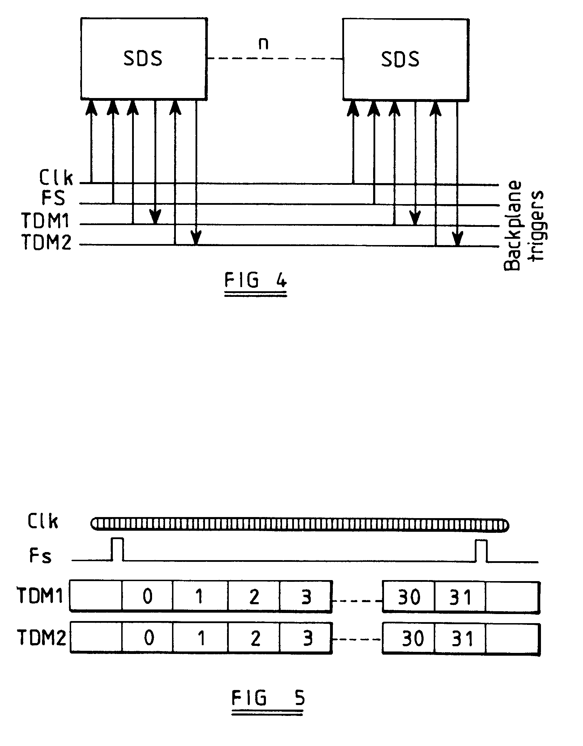

Figure 4 is a diagrammatic representation of the connection of each SDS to the back plane triggers whilst Figure 5 is a time diagram showing the relationship between the clock and sync signals and the time slots.

Incoming data comes straight into the SHARC processor where it can be processed. This enables, for example, DTMF (dual tone multi-frequency) recognition in bulk call applications. In order to enable the switching of data from T1/E1 time slots between lines attached to different SDS in a system, four back plane trigger lines are used. Two trigger lines are used for a 2.048MHz clock and a frame sync signal. These are generated by the first SDS in a system. The other two trigger lines are used to provide two time-division multiplexed buses, each carrying thirty-two 8-bit time slots, synchronised to the clock and frame sync signals. These two lines are connected to one of the serial ports on each SHARC.

Any number of SDS can be fitted into a system (within physical limits). Each SDS provides 2 T1/E1 lines and two connections to the back plane interface.

By a combination of the T1/E1 lines and the back plane interfaces, time slots on any T1/E1 line in the system can be connected to any other, limited only by the number of time slots that can be carried on the back plane. This is currently sixty-four. The connection of the time slots to one another is controlled by the existing controlling processor of the S765ST which instructs each SHARC to read or write to the relevant back plane line and time slot for cross connect.

One SDS is the master which drives the clock at 2.048MHz, and the frame sync which is one pulse every thirty-two time slots. Each SHARC is programmed to write and read any one of the time slots.

Each back plane time slot is both TX and RX, I. e. when one SDS is writing data into a time slot on one edge of the clock, another SDS can read the data on the following edge.

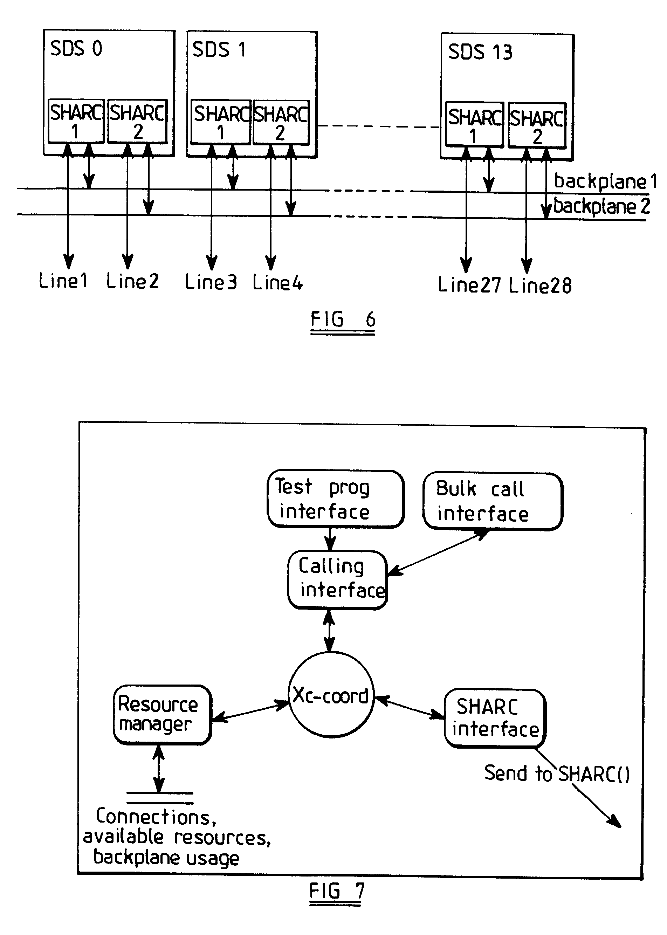

The cross-connect process enables connections to be made between incoming and out going time slots on any one T1/E1 SDS fitted to a S765ST. The cross-connect capability is made available to the test programmer via the user interfaces. A S765ST may be fitted with up to fourteen T1/E1 SDS boards (providing the TR303 specified maximum of twenty-eight T1 lines). This is shown in Figure 6. For V5 protocol, the maximum number of boards to be supported is lower, I. e. eight boards and sixteen E1 lines.

For cross-connects between SDS boards, data is passed on one of two back plane interfaces. Each back plane line can carry data from a maximum of thirty-two time slots. The total of sixty-four time slots therefore permits up to thirty-two simultaneous bi-directional time slot cross-connections.

In use, the system is first configured by the user to expect certain telephone numbers to be dialled. The system would be programmed by the user to map these telephone numbers to respective ports for subscribers.

Initially, the call processor monitors the subscribers looking for a subscriber going off hook. The call processor then allocates a time slot for the subscriber using the existing protocol (TR303 or V5. 2). If the protocol is V5. 1 then the time slot is already pre-allocated and there is no need for the call processor to allocate a time slot.

The call processor then generates a dial tone which is played down the time slot to the subscriber, and monitors the line for dialling by the subscriber.

On receipt of the first dial digit the processor stops generation of the dial tone and waits for the remaining dialled digits. The call processor decodes the DTMF or pulse dialled number and uses the mapping table previously set up by the user to determine which user port, i. e. subscriber is being dialled by the first subscriber. The call processor then allocates a time slot for the called subscriber (subscriber B) and performs the cross-connect. If subscriber B is engaged or the number is not available the call processor generates the relevant tone back to subscriber A. However, if subscriber B is available then the call processor initiates a ringing tone which is played to subscriber A.

The call processor unit waits for subscriber B to go off hook, detects the off hook and stops playing the ringing signal to subscriber A. It also removes the ringing signal to subscriber B and performs the cross-connect allocating one pair of time slots to subscriber A and one pair of time slots to subscriber B.

When either subscriber A or B goes on hook, the call processor monitors this and clears the cross-connect.

In practice, a bulk call generator would be used for most applications to simulate the subscribers.

The inter-relationship of software modules for controlling operation of the call processor will now be described with reference to figure 7. A central co-ordinating function *XC-COORD* has three peripheral interface modules, two providing communication between this task and others running on the CPU030 and the third managing access to the main internal data structures of the cross-connect process.

The calling interface of figure 7 provides a common access mechanism for the test programme ofthe cross-connect process. The functions provided by this common interface allow the setting up and removal of cross-connects between any two time slots of any T1/E1 interface connected to the ST.

The input parameters to the calling interface function identify the two time slots to be cross-connected. The first pair of parameters indicate the line number and the time slot position of one of the time slots, the following two parameters identify the second. All connections are bi-directional.

If the cross-connect function returns a value outside the connection number range then this indicates a failed connection attempt and the reason for the failure. These values are shown in Table 1 below.

The input parameter to the remove cross-connect function is the connection identification number of the cross-connect to be removed. This number must have been allocated by an earlier call to cross-connect.

The SHARC interface provides functions for the actual setting up and clearing down of cross-connections. It translates requests which identify relevant SHARC processors on the appropriate SDS boards.

The function *set up SHARC cross-connect* determines which messages to send to which SHARC processors in order to establish the required cross-connection. Given the cross-connection ID the function can retrieve line, time slot and back plane slot information for the connection from the resource manager. From these values, the function *set up SHARC cross-connect* can also determine which SHARCS on which SDS boards are relevant.

For any cross-connection there will always be a source (first) SHARC and a destination (second) SHARC. The destination SHARC may or may not be the same as the source SHARC. For some connections which traverse the back plane interface (those which go from a first SHARC on one SDS to a second SHARC on another) a third, intermediate SHARC is also involved. The intermediate SHARC is the other SHARC on one or other of the two SDS boards. For simplicity, whenever an intermediate SHARC is required it is always the other SHARC located on the SDS with the destination SHARC, unless that SHARC has no available capacity in which case the SHARC on the SDS board with the source SHARC is used.

The algorithm used to determine which SHARC or SHARCS are involved in a cross-connection is:
*First SDS* = *SDS associated with line A;*
*Second SDS* = *SDS associated with line B;*

*If line A is an even number,*
   *then first SHARC = SHARC 1, else SHARC 2;*
*If line B is an even number,*
   *then second SHARC = SHARC 1, else SHARC 2;*
*If first SHARC* != *second SHARC, then*
   *if second SHARC* == *SHARC 1 then*
   *intermediate SHARC* = *SHARC* 2, *else SHARC 1;*

### SAME SHARC, SAME SDS

Conditions met:
*first SHARC == second SHARC;*
*first SDS == second SDS*

Where the source and destination SHARCS are the same on the same SDS this means that no back plane resources are required and no intermediate SHARC is involved. A single message to a single SHARC completes the cross-connect.

### DIFFERENT SHARCS, SAME SDS

Conditions met:
*first SHARC != second SHARC*
*first SDS == second SDS*

Where the source and destination SHARCS are separate SHARCS on the same SDS board, this again means that no back plane resources are required and no intermediate SHARC is involved. A message to each of the two SHARCS completes the cross-connect.

Time slot A from the first SHARC'S T1/E1 connection is connected to position A in the connections between the two SHARCS on the SDS. It also connects position B on the internal connection to time slot A out of the first SHARC'S T1/E1 line.

### DIFFERENT SHARCS, DIFFERENT SDS, NO INTERMEDIATE SHARC

Conditions met:
*first SHARC == second SHARC*
*first SDS != second SDS*

In this case, the source and destination SHARCS are on separate SDS boards. This means that back plane resources are required and no intermediate SHARC is involved. A message to each of the two SHARCS completes the cross-connect. Local SPORT 0 is used to refer to the Tl/E1 line on the particular SHARC being addressed and local SPORT 1 refers to the back plane line on the same device.

### DIFFERENT SHARCS, DIFFERENT SDS WITH INTERMEDIATE SHARC

Conditions met:
*first SHARC != second SHARC*
*first SDS != second SDS*

The source and destination SHARCS are on different SDS boards and an intermediate SHARC is involved. Again, this means the back plane resources are required and a message is needed to each of the three SHARCS to complete the cross-connect.

### RESOURCE MANAGER

The resource manager within the cross-connect process is responsible for maintenance of the data structures used to keep track of current connections and back plane interface usage. This module provides the functions required by the *XC-COORD* module to determine whether to accept or reject cross-connection requests, based on existing time slot usage and availability of the back plane interface.

### XC-COORD

The cross-connecting co-ordination module responds to actions from the calling interface by making appropriate use of functions provided by the resource manager and the SHARC interface.

When requests for a connection are received via the calling interface, the *XC-COORD* module determines if the required time slots are available and if there is sufficient back plane resource. If so, then it performs the cross-connect by communicating relevant data to the SHARCS involved and using the resource manager to record the cross-connection and provide a connection number to be returned to the calling interface. Similar actions are required when requests for removing a connection are received. A call to the resource manager removes the record of the cross-connection and the back plane time slot is freed. The SHARC interface functions instruct the relevant DSP modules to disconnect the time slots.

## Claims

1. A local exchange emulator, for transmitting and receiving telephone line data, the emulator comprising:
a plurality of serial data sequencers;
and global serial communication means, said plurality of serial data sequencers each being interfaced with the global serial communication means;
wherein each serial data sequencer has a time division multiplexed I/O port for interfacing with a plurality of subscribers in use and digital signal processing means for taking measurements associated with data processed by the emulator;
said digital signal processing means has first and second serial I/O lines, the first serial I/O line being connected to the I/O port for direct data transfer therewith, and the second serial I/O line being connected to the global serial communication means;
and said first serial I/O lines each is time division multiplexed to the same order as the I/O port.

2. The emulator of claim 1 wherein the global serial communication means is time division multiplexed into a plurality of time slots.

3. The emulator of claim 1 or claim 2 wherein each digital signal processing means comprises first and second signal processors and data storage means.

4. The emulator of claim 3 wherein the global serial communication means comprises first and second channels;
and wherein the first digital signal processor of each digital signal processing means is connected to the first channel and the second digital signal processor of each digital signal processing means is connected to the second channel.

5. The emulator of claim 4 wherein the first digital signal processor and the second digital signal processor of each digital signal processing means are connected.

6. The emulator of any preceding claim wherein in each serial data sequencer, the I/O port defines T1/E1 lines which connect with the first I/O line of the digital signal processing means.

7. The emulator of any preceding claim wherein the global serial communication means is of a PCM format.

8. A method of establishing a cross connection comprising the steps of:
providing a plurality of time division multiplexed I/O lines;
providing a plurality of local processing means associated with each of said I/O lines;
providing global serial communication means;
and in response to a request for a cross connection to be made between a first of said I/O lines and a second of said I/O lines:
reserving a first time slot on said first I/O line for transmitting data;
reserving a second time slot on said first I/O line for receiving data;
reserving a third time slot on said second I/O line for transmitting data;
reserving a fourth time slot on said second I/O line for receiving data;
and establishing a data transfer link between said first and fourth time slots and a data
transfer link between said second and third time slots.

9. A method according to claim 8 including the steps of arranging said I/O lines in pairs and providing a respective one of said local processing means for each pair of said I/O lines.

10. A method according to claim 9 wherein if said first I/O line and said second I/O line do not share a common local processing means then the method comprises the step of establishing said data transfer link by means of said global serial communication means.

11. A method according to claim 10 wherein said global serial communication means is time division multiplexed, the method further comprising the steps of reserving two time slots of said global serial communication means in order to establish said data transfer link.

12. A method according to any one of claims 9 to 11 wherein each local processing means comprises first and second processors, each processor being associated with a respective one of said pair of I/O lines;
wherein said global serial communication means comprises first and second buses;
and wherein the method comprises the steps of associating said first processor of each said local processing means with said first bus and associating said second processor of each said local processing means with said second bus;
wherein the step of establishing said data transfer link comprises the steps of:
if the first I/O line is the same as the second I/O line then defining the cross connection at the processor associated with that I/O line;
if the first I/O line and the second I/O line are associated with processors of the same local processing means then defining the cross connection at that local processing means;
if the first I/O line is associated with a first processor, and said second I/O line is associated with another first processor then defining said cross connection via said first bus;
if the first I/O line is associated with second processor, and said second I/O line is associated with another second processor then defining said cross connection via said second bus; and
if the second I/O line is associated with different local processing means from the first I/O line and a different one of the first and second processors, then establishing a cross connection via one of said buses and an intermediate processor.
